# EUROPEAN PATENT APPLICATION

(11) **EP 3 151 089 A1**
(43) Date of publication of application: **05.04.2017**
(21) Application number: 14861178.3
(22) Date of filing: 03.09.2014
(51) Int. Cl.: G06F 3/041, G02F 1/1333

(54) **EMBEDDED TOUCHSCREEN AND DISPLAY DEVICE**

(30) Priority: 30.05.2014 CN 201410240435
(71) Applicant: BOE Technology Group Co., Ltd., Beijing 100015 (CN); Beijing BOE Optoelectronics Technology Co., Ltd., Beijing 100176 (CN)
(72) Inventor: LIU, Yingming, Beijing 100176 (CN); DONG, Xue, Beijing 100176 (CN); WANG, Haisheng, Beijing 100176 (CN); YANG, Shengji, Beijing 100176 (CN); DING, XIaoliang, Beijing 100176 (CN)
(74) Representative: Isarpatent
(86) International application number: PCT/CN2014/085790
(87) International publication number: WO 2015/180284

(57) **Abstract**

The present disclosure discloses an in-cell touch panel, which includes an array substrate, an opposite substrate, a touch driving electrode including a plurality of touch driving sub-electrodes which are located between adjacent common electrodes. Each touch driving electrode is provided with at least one first via hole, each common electrode is provided with at least one second via hole. There exist at a first common electrode and a second common electrode which are adjacent to each other in all common electrodes. An arrangement manner of first via holes in at least one of the first common electrode and the second common electrode is identical to an arrangement manner of second via holes in all touch driving sub-electrodes between the first common electrode and the second common electrode. According to embodiments of the present disclosure, it may improve brightness uniformity of display panel.

## Description

### CROSS-REFERENCE TO RELATED APPLICATION

This application claims a priority to Chinese Patent Application No. 201410240435.3 filed on May 30, 2014, the disclosure of which is incorporated in its entirety by reference herein.

### TECHNICAL FIELD

The present disclosure relates to the field of touch technology; in particular to an in-cell touch panel and a display device.

### BACKGROUND

With the rapid development of the display technology, a touch screen panel has been the increasing popularity of people's lives. Currently, the touch screen panels may be categorized into add on mode touch panels, on cell touch panels and in-cell touch panels in accordance with their structures. The in-cell touch panel includes touch electrodes built inside a liquid crystal display, which may decrease an entire thickness of modules and greatly reduce manufacturing cost of the touch screen, and is favored by many panel manufacturers.

Currently, liquid crystal display technologies capable of achieving wide view angle mainly include an in-plane switch technology (IPS) and an advanced super dimension switch (ADS). The ADS technology refers to that: a multi-dimensional electric field is formed by an electric field generated among edges of slit electrodes in one same plane, and an electric field generated between a layer of the slit electrodes and a bar-like common electrode layer, so that all aligned liquid crystal molecules located between the slit electrodes and over the electrodes in a liquid crystal cell are able to be deflected, thereby to improve liquid crystal work efficiency and widen the view angle. The ADS can improve image quality of a TFT-LCD product, with advantages of high resolution, high transmittance, low power consumption, wide viewing angle, high aperture ratio, low chromatic aberration, no push mura, and the like. A high aperture ratio-advanced super dimension switch (H-ADS) technology is one important implantation model of the ADS technology.

The current structure of the in-cell touch panel based on the ADS technology and the H-ADS technology is to divide a common electrode layer which is connected as a whole plane in an array substrate to form a touch driving electrode and a common electrode arranged crossly with and insulated from each other. A touch sensing electrode is further arranged at an opposite substrate corresponding to a region where the common electrode is located. The touch driving electrode is driven in a time-division manner, so as to achieve a touch function and a display function.

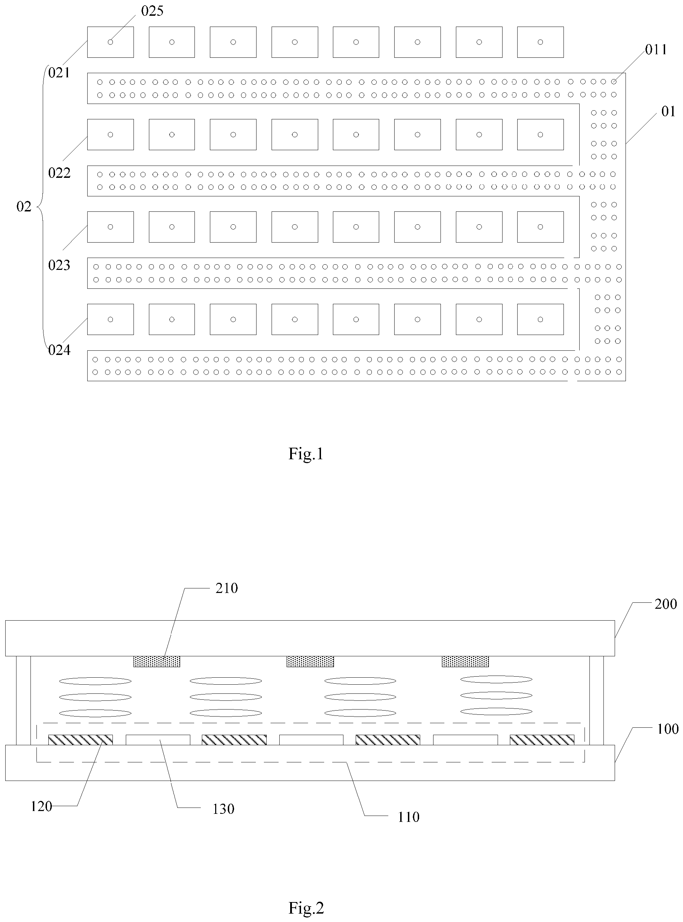

In the above-mentioned structure of the in-cell touch panel, Fig.1 shows a schematic view of common electrode layer after being divided. Each common electrode 01 is a bar-like electrode. Each touch driving electrode 02 is composed of a plurality of touch driving sub-electrodes 021, 022, 023, 024, ..., which are arranged in a column. Each of the touch driving sub-electrodes 021, 022, 023, 024, ... is located between adjacent common electrodes 01. The touch driving sub-electrodes 021, 022, 023, 024, ..., belonging to one same touch driving electrode 02 and located at both sides of the common electrode 01, are electrically connected through a touch driving signal line.

It is required to load a common electrode signal to the common electrode 01 and the touch driving electrode 02 at the same time for achieving the display function.

As shown in Fig.1, in order to load a signal to the common electrode 01 and the touch driving electrode 02, all of the common electrodes 01 and the touch driving electrodes 02 are provided with a via hole 011 for connecting to a common electrode driving signal transmission line and a via hole 025 for connecting to a touch driving signal transmission line, respectively.

It could find out that there is large number of via holes in the common electrode, to guarantee uniformity of signals in the common electrodes.

However, the via holes 011 and the via holes 025 are designed separately in the related art, resulting in extremely non-uniform distribution of via holes within the whole display region, and these non-uniform via holes may further lead to a poor brightness uniformity of the panel, detailed description is shown as below.

The brightness uniformity refers to actual brightness difference of different pixels in a display panel driven by one same signal. The brightness uniformity relates to many factors, including via hole design, which is further described below.

When there is a via hole in a region corresponding to a pixel A, then a surface of the via hole towards a liquid crystal layer may reflect light irradiating thereon, as a result, as compared with a corresponding region of a pixel B without a via hole, there are more light entering the liquid crystal layer of the pixel A under same circumstances, resulting in that the pixel A may have an actual brightness higher than that of the pixel B.

In addition, the via holes may also adversely affect an electrical field applied to the liquid crystal layer, which further adversely influence the actual brightness of the pixels.

### SUMMARY

In view of this, the present disclosure provides an in-cell touch panel and a display device, so as to improve brightness uniformity of panels.

In order to achieve the above object, one embodiment of the present disclosure provides an in-cell touch panel, including:
an array substrate with a common electrode layer; and
an opposite substrate which is arranged opposite to the array substrate;
wherein the common electrode layer of the array substrate is composed of a plurality of touch driving electrodes and a plurality of common electrodes which are insulated from the touch driving electrodes;
the touch driving electrode includes a plurality of touch driving sub-electrodes arranged along an extending direction of the touch driving electrode, and each touch driving sub-electrode is located between adjacent common electrodes;
each common electrode is provided with at least one first via hole, for connecting a common electrode signal transmission line;
each touch driving sub-electrode is provided with at least one second via hole, for connecting a touch driving signal transmission line;
the pluralities of common electrodes include at least one pair of a first common electrode and a second common electrode adjacent to the first common electrode; an arrangement manner of the first via holes in at least one of the first common electrode and the second common electrode is identical to an arrangement manner of the second via holes in all touch driving sub-electrodes between the first common electrode and the second common electrode.

Alternatively, the common electrode includes a plurality of common sub-electrodes arranged along an extending direction of the common electrode. One time period during which the in-cell touch panel processes one frame is divided into a display time period and a touch time period; the touch driving sub-electrode receives a common electrode signal during the display time period and receives a touch driving signal during the touch time period; and the common sub-electrode receives the common electrode signal during both the display time period and the touch time period.

Alternatively, each common sub-electrode and each touch driving sub-electrode have same shape and same size, and define a matrix of sub-electrodes arranged in lines and columns. Each common sub-electrode is provided with one first via hole, each touch driving sub-electrode is provided with one second via hole; in each sub-electrode column in the matrix of sub-electrodes, all via holes have an identical relative location in corresponding sub-electrodes.

Alternatively, the opposite substrate includes a plurality of touch sensing electrodes arranged in an extending direction intersecting the extending direction of the touch driving electrode; the in-cell touch pane includes a plurality of pixel units arranged in a matrix manner.

Each touch driving electrode extends along a line direction of the pixel units, each touch sensing electrode and each common electrode extend along a column direction of the pixel units; or each touch driving electrode extends along the column direction of the pixel units, each touch sensing electrode and each common electrode extend along the line direction of the pixel units.

Alternatively, the opposite substrate includes a black matrix which is arranged at a base substrate; an orthographic projection of the touch sensing electrode on the base substrate is located within a region where the black matrix is located.

Alternatively, in each touch driving sub-electrode line arranged along the extending direction of the common electrode, a distance between projection points of any two of the second via holes on a plane perpendicular to the extending direction of the common electrode is greater than or equal to a preset value.

Alternatively, each second via hole is located at a bisector of the touch driving sub-electrode, which is perpendicular to the extending direction of the common electrode.

In order to achieve the above object, one embodiment of the present disclosure provides a display device, which includes the above in-cell touch panel.

The present disclosure has the following advantageous effects. According to embodiments of the present disclosure, the via holes in at the common electrode and the via holes in adjacent touch driving sub-electrodes are designed integrally, so that an area of regions in which the via holes are arranged in the same manner may be greatly increased, thereby improving the brightness uniformity of the panel.

### BRIEF DESCRIPTION OF THE DRAWINGS

Fig.1 is a schematic view showing a common electrode layer in an in-cell touch panel in the related art;
Fig.2 is a schematic view showing an in-cell touch panel according to one embodiment of the present disclosure;
Fig.3a is a schematic view showing an arrangement manner of via holes in a common electrode layer in the in-cell touch panel according to one embodiment of the present disclosure;
Fig.3b is a schematic view showing signal connections corresponding to the arrangement manner of via holes in the common electrode layer in the in-cell touch panel shown in Fig.3 a according to one embodiment of the present disclosure;
Fig.4 is a diagram showing a driving timing sequence diagram of the in-cell touch panel according to one embodiment of the present disclosure;
Fig.5 is a schematic view showing another arrangement manner of via holes in the common electrode layer in the in-cell touch panel according to one embodiment of the present disclosure;
Fig.6a to 6c are schematic views showing arrangement manners of via holes in lines of touch driving sub-electrodes according to one embodiment of the present disclosure.

### DETAILED DESCRIPTION

Specific implementation of an in-cell touch panel and a display device provided in embodiments of the present disclosure will be described in details hereinafter in conjunction with the drawings. The following drawings are for illustrating the present disclosure, thickness and shapes of each film layer and structural blocks therein are not of a true scale.

According to embodiments of the present disclosure, via holes in a common electrode and a touch driving electrode are designed integrally, so that the via holes in the common electrode and the touch driving electrode are arranged in a relative uniform manner in the whole panel, so as to improve brightness uniformity of the panel.

As shown in Fig.2, an in-cell touch panel according to one embodiment of the present disclosure includes an array substrate 100 with a common electrode layer 110, and an opposite substrate 200 which is arranged opposite to the array substrate. The common electrode layer 110 of the array substrate 100 is composed of a plurality of touch driving electrodes 120 and a plurality of common electrodes 130 which are insulated from each other.

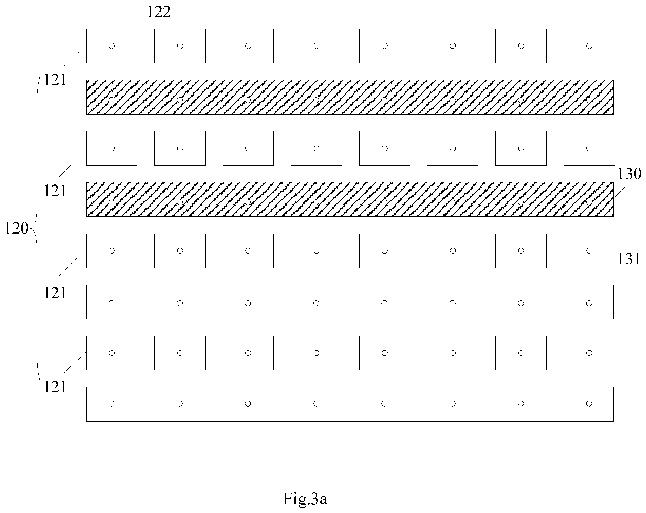

As shown in Fig.3a, the touch driving electrode 120 includes a plurality of touch driving sub-electrodes 121 arranged along an extending direction of the touch driving electrode. Each touch driving sub-electrode 121 is located between adjacent common electrodes 130.

The opposite substrate 200 includes a plurality of touch sensing electrodes 210 arranged in an extending direction intersecting the extending direction of the touch driving electrode.

Each common electrode 130 is provided with at least one first via hole 131, for connecting a common electrode signal transmission line.

Each touch driving sub-electrode 121 is provided with at least one second via hole 122, for connecting a touch driving signal transmission line. In one specific embodiment of the present disclosure, there exist at least one pair of a first common electrode and a second common electrode adjacent to the first common electrode among all the common electrodes. An arrangement manner of the first via holes in at least one of the first common electrode and the second common electrode is identical to an arrangement manner of the second via holes in all the touch driving sub-electrodes which are located between the first common electrode and the second common electrode.

Taking a situation shown in Fig.3a as an example, electrodes filled with oblique lines represent the first common electrode and the second common electrode adjacent to the first common electrode. An arrangement manner of the first via holes 131 in the first common electrode and the second common electrode is identical to an arrangement manner of the second via holes 122 in the pluralities of touch driving sub-electrodes which are located between the first common electrode and the second common electrode.

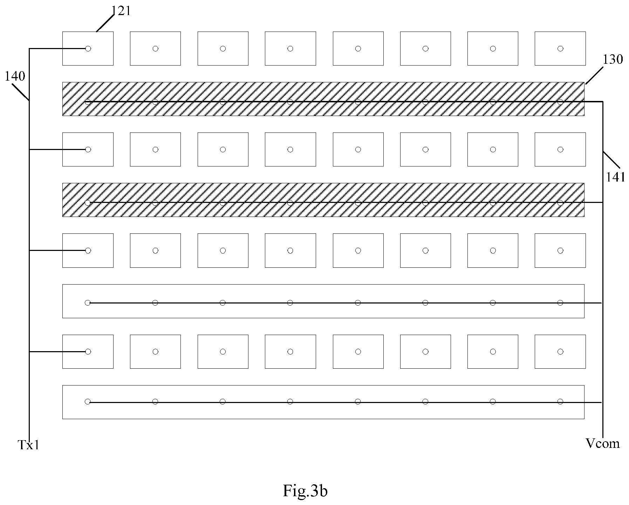

As shown in Fig.3b, when the via holes in the common electrodes and the touch driving electrodes are arranged in the manner as shown in Fig.3a, all via holes in the touch driving sub-electrodes are electrically connected to a touch driving signal transmitting terminal (Tx1) through a touch driving signal line 140 (Fig.3b only shows signal connections for the first touch electrode); while all common electrodes 130 are electrically connected to a common electrode driving signal transmitting terminal (Vcom) through a common electrode signal transmission line 141.

It would be appreciated that the above connection manner is just exemplary, other connection manners may also be adopted in embodiments of the present disclosure.

According to embodiments of the present disclosure, because the via holes in the common electrodes and the via holes in the adjacent touch driving sub-electrodes are designed integrally, thus, an area of regions in which the via holes are arranged in the same manner may be greatly increased, thereby improving the brightness uniformity of the panel.

According to embodiments of the present disclosure, it would be appreciated that the touch sensing electrode 210 is just required to be arranged to be intersected with the touch driving electrode 120 (one optional example is that the touch sensing electrode 210 is arranged perpendicularly to the touch driving electrode 120. An arrangement direction of the touch driving electrode 120 may be identical to or perpendicular to the extending direction of the common electrode, which will not be specifically defined in embodiments of the present disclosure.

In the above-mentioned touch panel according to embodiments of the present disclosure, a time-division driving pattern is used for the touch time period and the display time period, so that chips for driving display and touch may be integrated to reduce manufacturing cost, and the time-division driving pattern may also decrease mutual interference between display and touch to improve image quality and touch accuracy. Detailed description is shown below.

In the in-cell touch panel according to embodiments of the present disclosure, the common electrode includes a plurality of common sub-electrodes arranged along an extending direction of the common electrode. One time period during which the in-cell touch panel processes one frame is divided into a display time period and a touch time period. The touch driving sub-electrode receives the common electrode signal during the display time period, and receives the touch driving signal during the touch time period. The common sub-electrode receives the common electrode signal during both the display time period and the touch time period.

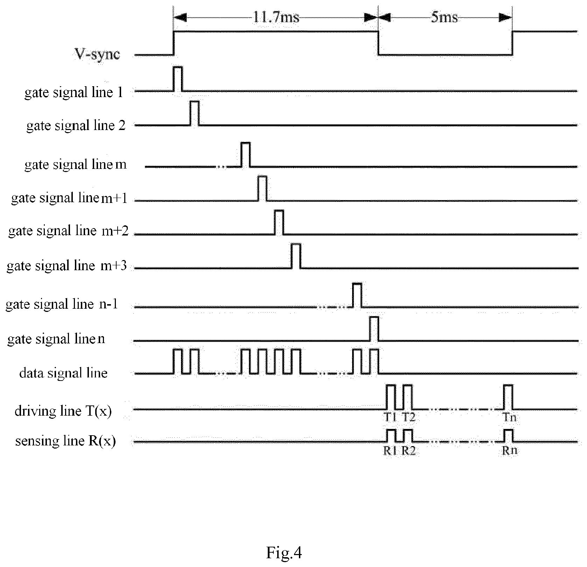

Specifically, in the driving timing sequence diagram shown in Fig.4, one time period during which the touch panel displays each frame (V-sync) is divided into a display time period and a touch time period. For example, in the driving timing sequence diagram shown in Fig.4, the time period during which the touch panel displays one frame is 16.7ms, in which 5ms is taken as the touch time period, the rest 11.7ms is taken as the display time period. Of course, these two time periods may be adjusted appropriately based on IC chips, which is not specifically defined herein. During the display time period, a gate scanning signal is applied successively to each of the gate signal lines Gate 1, Gate 2, ..., Gate n in the touch panel, and a grayscale signal is applied to a data signal line. Accordingly, the touch driving electrode Tx, serving as a common electrode, is provided with a constant electrode signal by an IC chip which is connected to the touch driving electrode, thereby to achieve the liquid crystal display function. During the touch time period, the IC chip which is connected to the touch driving electrode provides touch scanning signals (T1, T2, ..., Tn) to the various touch driving electrodes, respectively; at same time, the various touch sensing electrodes sense touch sensing signals (R1, R2, ..., Rn), respectively, so as to achieve the touch function. During the touch time period, there is no signal inputting into each of gate signal lines and data signal lines in the touch panel.

The common electrode signal is loaded on each common electrode in the common electrode layer during both the display time period and the touch time period; or, the common electrode signal is loaded on each common electrode during the display time period, and each common electrode is grounded or floating (i.e., without signal imputing) during the touch time period.

According to embodiments of the present disclosure, a plurality of pixel units, arranged in the matrix manner, is formed inside the in-cell touch panel. Each touch driving electrode extends along a line direction of the pixel units. Each touch sensing electrode and each common electrode extend along a column direction of the pixel units. Alternatively, each touch driving electrode extends along the column direction of the pixel units, each touch sensing electrode and each common electrode extend along the line direction of the pixel units. Detailed descriptions are shown below.

During specific implementation, a plurality of pixel units is generally formed in the matrix pattern inside the in-cell touch panel. Optionally, each touch driving electrode 120 is generally arranged extending along the line direction of the pixel units. Each touch sensing electrode 210 and each common electrode 130 are arranged extending the column direction of pixel units. Of course, such wiring directions of the two may also be modified in accordance with sizes of application devices, i.e., each touch driving electrode 120 is arranged extending along the column direction of the pixel units, and each touch sensing electrode 210 and each common electrode 130 are arranged extending along the line direction of the pixel units, which will not be defined herein.

An example of arranging each touch driving electrode 120 to extend along the column direction of the pixel units and arranging each touch sensing electrode 210 and each common electrode 130 to extend along the line direction of the pixel units is taken for illustration.

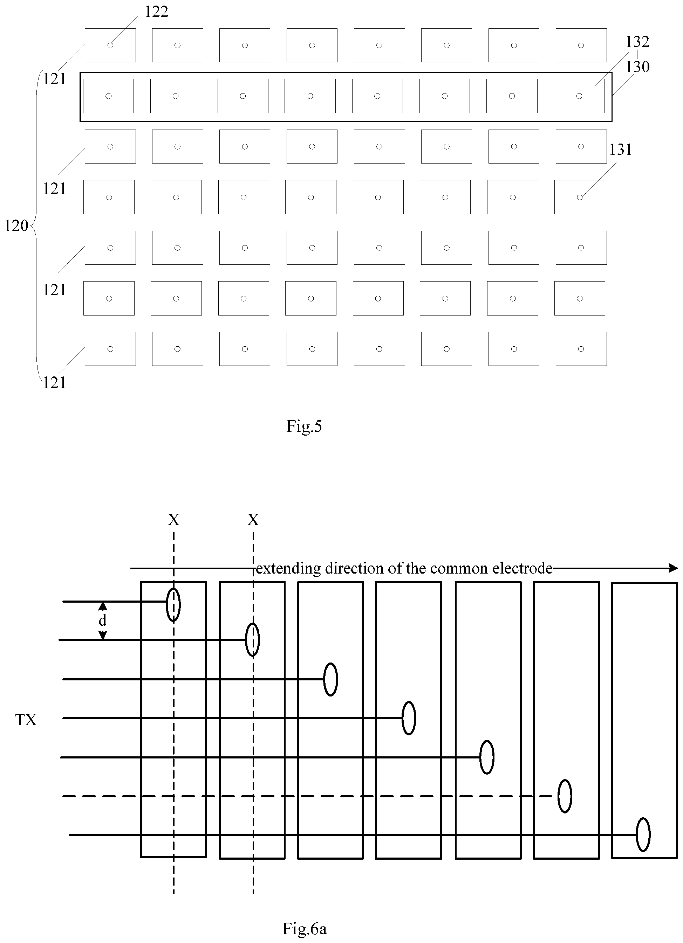

In one embodiment of the present disclosure, as shown in Fig.5, the common electrode 130 includes a plurality of common sub-electrodes 132 along the extending direction of the common electrode 130. Each common sub-electrode 132 has same shape and same size as those of the touch driving sub-electrode 121, thereby defining a matrix of sub-electrodes arranged in lines and columns. Each common sub-electrode 132 is provided with one first via hole 131, and each touch driving sub-electrode 121 is provided with one second via hole 122. In each sub-electrode column in the matrix of sub-electrodes, all via holes have an identical relative location in corresponding sub-electrodes.

In the in-cell touch panel and the display device according to embodiments of the present disclosure, the common electrode layer connected as a whole plane on the array substrate is divided to form a plurality of touch driving electrodes and a plurality of common electrodes which are insulated from each other. Each touch driving electrode includes a plurality of touch driving sub-electrodes arranged long the extending direction of the touch driving electrode. Each touch driving sub-electrode is located between adjacent common electrodes. Each common electrode includes a plurality of common sub-electrodes arranged along the extending direction of the common electrode. The touch sensing electrode is arranged at the opposite substrate. A projection of each touch sensing electrode on the array substrate is located within a region where the common electrode is located. The touch driving electrode is driven in the time-division pattern, so as to achieve the touch function and the display function. In the in-cell touch panel according to embodiments of the present disclosure, since the touch driving electrode is composed of a plurality of touch driving sub-electrodes, and the common electrode is composed of a plurality of common sub-electrodes, thus, signal transmitting loads of the two are relatively close, and transmitting speeds of the common signal in the common electrode and the touch driving electrode are also relatively close during the display time period, so as to prevent the problem of non-uniform displaying images, thereby to improve image quality.

Further, since the common electrode and the touch driving electrode each are formed by sub-electrodes of same shape and same size, thus, a matrix of sub-electrodes is defined. The sub-electrodes are provided with the via holes at the same location therein, respectively, so as to further guarantee a uniform distribution of via holes in the whole panel, thereby to improve the brightness uniformity of the panel.

During specific implementation, in the in-cell touch panel according to embodiments of the present disclosure, the opposite substrate usually includes a black matrix which is arranged at a base substrate. The touch driving electrode 210 may be located between the base substrate and the black matrix, or may be located on the black matrix, which will not be defined herein.

In order to ensure that each touch sensing electrode 210 does not adversely affect an aperture ratio of each pixel unit, an orthographic projection of the touch sensing electrode 210 on the opposite substrate 200 is located within a region where the black matrix is located. Then, the touch sensing electrode 210 may be covered by the black matrix, thereby the aperture ratio and the light transmittance of display may not be adversely affected.

Specifically, a pattern of each touch sensing electrode 210 may be arranged at a gap between every two sub-pixel units (RBG) of the pixel units, or may be arranged at a gap only between the pixel units, which is not defined herein.

Specifically, as the orthographic projection of the touch sensing electrode, which is arranged at the color filtering substrate, on the opposite substrate 200 is located within a region where the black matrix is located, the pixel units may not be shielded. Thus, the touch sensing electrode may be specifically made of a transparent conductive oxide, such as ITO or IZO, or may be made of a metal. The resistance of the touch sensing electrode may be effectively decreased when the touch sensing electrode is made of metal.

In one embodiment of the present disclosure, the via holes in the touch driving sub-electrode line which is arranged along the extending direction of the common electrode, may be arranged in various patterns. As shown in Fig.3b, the via holes in the touch driving sub-electrode line which is arranged along the extending direction of the common electrode, are arranged in a straight line parallel to the common electrode.

In order to facilitate wring, in one embodiment of the present disclosure, in the touch driving sub-electrode lines arranged along the extending direction of the common electrode, all touch driving sub-electrodes are of the consistent shape and the identical size. Each touch driving sub-electrode is provided with one second via hole. In the touch driving sub-electrode line arranged along the extending direction of the common electrode, a distance between projections points of any two of the second via holes on a plane perpendicular to the extending direction of the common electrode is greater than or equal to a preset value.

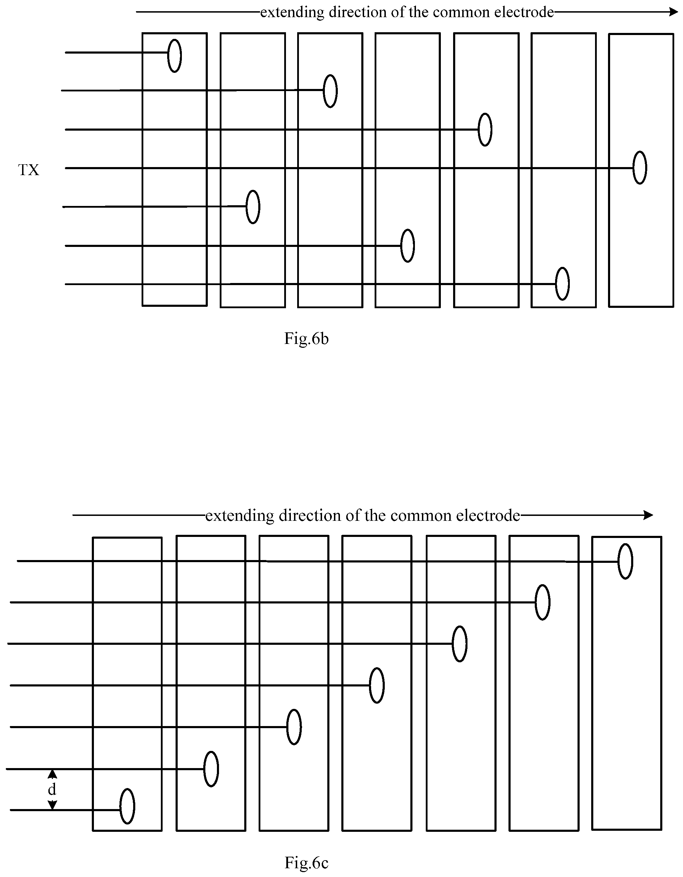

Several kinds of possible touch driving sub-electrode lines meeting the above rule for arranging via holes are shown in Fig.6a to 6c. In Fig.6a to 6c, d represents a distance between two projections points of a via hole in a first touch driving sub-electrode and a via hole in a second touch driving sub-electrode on a plane perpendicular to the extending direction of the common electrode.

As shown in Fig. 6a, each second via hole is located at a bisector X of the touch driving sub-electrode, which is perpendicular to the extending direction of the common electrode

Based on one same inventive concept, one embodiment of the present disclosure also provides a display device, which includes the above-mentioned in-cell touch panel according to embodiments of the present disclosure. The display device may be any products or components with display function such as a liquid crystal panel, a mobile phone, a flat computer, a television, a monitor, a laptop computer, a digital frame or a navigator. The implementation of such display device may refer to embodiments of the above-mentioned in-cell touch panel, which will not be repeated herein.

It should be appreciated that, a person skilled in the art may make further improvements and modifications without departing from the principle of the present disclosure, and these improvements and modifications shall also fall within the scope of the present disclosure.

## Claims

1. An in-cell touch panel, comprising:
an array substrate with a common electrode layer; and
an opposite substrate which is arranged opposite to the array substrate;
wherein the common electrode layer of the array substrate is composed of a plurality of touch driving electrodes and a plurality of common electrodes which are insulated from the touch driving electrodes;
the touch driving electrode comprises a plurality of touch driving sub-electrodes arranged along an extending direction of the touch driving electrode, and each touch driving sub-electrode is located between adjacent common electrodes;
each common electrode is provided with at least one first via hole for connecting a common electrode signal transmission line;
each touch driving sub-electrode is provided with at least one second via hole for connecting a touch driving signal transmission line;
the pluralities of common electrodes include at least one pair of a first common electrode and a second common electrode adjacent to the first common electrode; an arrangement manner of first via holes in at least one of the first common electrode and the second common electrode is identical to an arrangement manner of second via holes in all touch driving sub-electrodes between the first common electrode and the second common electrode.

2. The in-cell touch panel according to claim 1, wherein the common electrode comprises a plurality of common sub-electrodes arranged along an extending direction of the common electrode.

3. The in-cell touch panel according to claim 2, wherein one time period during which the in-cell touch panel processes one frame is divided into a display time period and a touch time period;
the touch driving sub-electrode receives a common electrode signal during the display time period and receives a touch driving signal during the touch time period; and
the common sub-electrode receives the common electrode signal during both the display time period and the touch time period.

4. The in-cell touch panel according to claim 2 to 3, wherein each common sub-electrode and each touch driving sub-electrode have a same shape and a same size, and form a matrix of sub-electrodes arranged in lines and columns.

5. The in-cell touch panel according to any one of claims 2 to 4, wherein each common sub-electrode is provided with one first via hole, each touch driving sub-electrode is provided with one second via hole;
in each sub-electrode column in the matrix of sub-electrodes, all via holes have an identical relative location in corresponding sub-electrodes.

6. The in-cell touch panel according to any one of claims 1 to 5, wherein the opposite substrate comprises a plurality of touch sensing electrodes arranged in an extending direction intersecting the extending direction of the touch driving electrode; the in-cell touch pane comprises a plurality of pixel units arranged in a matrix manner;
each touch driving electrode extends along a line direction of the pixel units, each touch sensing electrode and each common electrode extend along a column direction of the pixel units; or
each touch driving electrode extends along the column direction of the pixel units, each touch sensing electrode and each common electrode extend along the line direction of the pixel units.

7. The in-cell touch panel according to claim 6, wherein the extending direction of the touch sensing electrode is perpendicular to the extending direction of the touch driving electrode.

8. The in-cell touch panel according to any one of claims 1 to 5, wherein the opposite substrate comprises a black matrix which is arranged at a base substrate; an orthographic projection of the touch sensing electrode on the base substrate is located within a region where the black matrix is located.

9. The in-cell touch panel according to any one of claims 1 to 5, wherein in each touch driving sub-electrode line arranged along the extending direction of the common electrode, a distance between projection points of any two of the second via holes on a plane perpendicular to the extending direction of the common electrode is greater than or equal to a preset value.

10. The in-cell touch panel according to claim 9, wherein the via holes in each touch driving sub-electrode line arranged along the extending direction of the common electrode, are arranged in a straight line parallel to the common electrode.

11. The in-cell touch panel according to claim 9, wherein each second via hole is located at a bisector of the touch driving sub-electrode, which is perpendicular to the extending direction of the common electrode.

12. A display device, comprising the in-cell touch panel according to any one of claims 1 to 11.
